# EUROPÄISCHE PATENTSCHRIFT

(11) **EP 1 424 581 B1**
(45) Veröffentlichungstag und Bekanntmachung des Hinweises auf die Patenterteilung: **08.03.2006**
(21) Anmeldenummer: 03026040.0
(22) Anmeldetag: 12.11.2003
(51) Int. Cl.: G02B 21/18, G02B 21/22

(54) **Stereomikroskop**
Stereomicroscope
Microscope stéréoscopique

(30) Priorität: 29.11.2002 DE 10255960
(43) Veröffentlichungstag der Anmeldung: 02.06.2004
(73) Patentinhaber: Leica Microsystems (Schweiz) AG, 9435 Heerbrugg (CH)
(72) Erfinder: Sander, Ulrich, Dr., 9445 Rebstein (CH)
(74) Vertreter: Hössle Kudlek & Partner

(56) Entgegenhaltungen:
- US-A- 5 822 114
- US-A1- 2001 010 592
- ANONYMOUS: "Leica M841 EBS" INTERNET ARTICLE, [Online] - 1995 XP002276453 Gefunden im Internet: <URL:http://www.surgicalscopes.com/WebSite /SC_SOM.nsf?opendatabase&path=/Website/Pro ducts.nsf/(ALLIDs)/D7C94E5EC8E6ADC5C1256A3 1004A6336> [gefunden am 2004-04-07] -& ANONYMOUS: "Leica M841 " INTERNET ARTICLE, [Online] 1995, XP002276509 Gefunden im Internet: <URL:http://www.surgicalscopes.com/WebSite /SC_SOM.nsf?opendatabase&path=/Website/pro ducts.nsf/(ALLIDs)/D49070FC3E17B704C1256BE C00278278> [gefunden am 2004-04-07]

## Beschreibung

Die vorliegende Erfindung betrifft ein Stereomikroskop nach dem Oberbegriff des Patentanspruchs 1.

In der Ophthalmologie eingesetzte Operationsmikroskope bieten die Möglichkeit, dass sowohl ein Hauptoperateur als auch ein Assistent das gleiche Operationsfeld einsehen können.

Ein derartiges ophthalmologisches Operationsmikroskop ist beispielsweise aus der DE 43 31 635 C2 bekannt. Das dort beschriebene Operationsmikroskop weist je einen Binokulartubus für einen Haupt- und einen Mitbeobachter sowie einen Strahlteiler 4, der das Objektlicht auf den Haupt- und Mitbeobachter aufteilt, auf. Als nachteilig bei diesem Mikroskop wird angesehen, dass es relativ hoch baut, da die vollständige Vergrößerungsoptik für den Hauptbeobachter im wesentlichen vertikal angeordnet ist.

Aus der DE 33 33 471 C2 ist ein Stereomikroskop zur Simultanbeobachtung für einen ersten und einen zweiten Beobachter bekannt. Hierbei erfolgt eine Aufteilung der Strahlengänge für den ersten und zweiten Beobachter mittels einer optischen Teilerplatte, wodurch ein Lichtintensitätsverlust in Kauf genommen werden muss.

Ein ähnliches Mikroskop ist schließlich aus der US 5,898,518 bekannt.

Derartige Operationsmikroskope haben in der Praxis eine Anzahl grundlegender Anforderungen zu erfüllen.

Eine Anforderung besteht darin, dass die Bauhöhe des Mikroskops aus ergonomischen Gründen so gering wie möglich gehalten wird. Ferner wird gefordert, dass der Assistenteneinblick schnell und ohne Umbauarbeiten von der rechten zur linken Seite des Mikroskops (oder umgekehrt) verschwenkt werden kann, und dass durch Zubehör, welches nur für bestimmte Operationstechniken benötigt wird, weder die Bildqualität noch die Bauhöhe negativ beeinflusst wird. Ferner sollen sowohl der Hauptbeobachter als auch der Assistent die Möglichkeit haben, den so genannten Red-Reflex in gleicher Güte zu beobachten. Weiterhin soll der freie Arbeitsabstand, d. h. der Bereich zwischen Objekt und Objektiv, nicht durch Bauelemente verringert werden.

Bei herkömmlichen Mikroskopen werden diese Anforderungen nur teilweise erfüllt.

Bei dem Operationsmikroskop M841 der Anmelderin ist beispielsweise gewährleistet, dass der Assistent und der Hauptoperateur tatsächlich das gleiche Blickfeld haben.

Dies wird dadurch erreicht, dass die assistentische Beobachtungseinrichtung oberhalb des Vergrößerungssystems angeordnet ist, und als Vergrößerungssystem ein Zoom-System verwendet wird, das aus vier identischen monoskopischen Vergrößerungssystemen aufgebaut ist. Dabei bilden jeweils zwei von den vier zueinander parallel liegenden Systemen das stereoskopische Vergrößerungssystem für den Hauptbeobachter. Auf der Verbindungsachse dieser Systeme senkrecht liegende weitere Systeme bzw. Kanäle stellen hierbei das stereoskopische Vergrößerungssystem für den Assistenten dar.

Aus der US 2001/001 05 92 A1 ist ein in der Neurochirurgie einsetzbares Mikroskop bekannt, welches ein Objektivsystem, ein Zoom-System und ein Okular-System aufweist. Hierbei ist das Objektivsystem im wesentlichen vertikal angeordnet, während das aus zwei Einzelsystemen bzw. optischen Kanälen bestehende Zoom-System horizontal angeordnet ist. Die wesentliche Neuerung bei dem dort beschriebenen Mikroskop liegt darin begründet, dass die Achse des Zoom-Systems senkrecht zu der Achse des Hauptobjektivs liegt. Das Zoom-System besteht, wie erwähnt, wiederum aus zwei identischen Vergrößerungskanälen, deren Achsen parallel zueinander verlaufen, womit die stereoskopische Betrachtung eines Objektes durch den Hauptoperateur gewährleistet ist. Als nachteilig bei dem dort beschriebenen Mikroskop wird empfunden, dass aufgrund der Verwendung eines halbdurchlässigen Strahlenteilers zur räumlichen Trennung eines Assistenten-Strahlengangs von einem Hauptoperateur-Strahlengang relativ starke Lichtverluste nicht vermieden werden können. Auch wird der freie Arbeitsabstand erheblich durch das Assistentenmikroskop reduziert. Ein hoher Aufwand bezüglich der Optik ist erforderlich, da Hauptoperateur und Assistent zwei separate Hauptobjektive benötigen.

Die vorliegende Erfindung hat zum Ziel, ein Stereomikroskop mit einer möglichst optimalen Lichtökonomie bei gleichzeitiger einfacher Handhabbarkeit, geringer Bauhöhe, uneingeschränktem freiem Arbeitsabstand und einem gemeinsamen Hauptobjektiv zur Verfügung zu stellen.

Dieses Ziel wird erreicht mit einem Stereomikroskop mit den Merkmalen des Patentanspruchs 1.

Durch die erfindungsgemäße Maßnahme, wenigstens drei im wesentlichen horizontal verlaufende Vergrößerungskanäle bei einem Zoom-System vorzusehen, ist es zunächst möglich, ein ophthalmologisches Operationsmikroskop mit der Möglichkeit einer stereoskopischen Betrachtung für einen Hautoperateur, und lediglich einer monoskopischen Betrachtung durch einen Assistenten vorzusehen. Dadurch, dass hierfür in dem Zoom-System drei Vergrößerungs- bzw. Beobachtungskanäle vorgesehen sind, ist eine räumliche Trennung von Hauptoperateur-Strahlengang und Assistenten-Strahlengang zur Definition jeweiliger Beobachtungsachsen in einfacher Weise ohne die Notwendigkeit der Verwendung von halbdurchlässigen Strahlungsteilern möglich. Aufgrund der horizontal verlaufenden Vergrößerungs- bzw. Beobachtungskanäle ist hierbei gleichzeitig eine sehr kleine Bauhöhe des Mikroskops realisierbar, welche - wie erwähnt - aus ergonomischen Gründen sehr günstig ist. Es ist ebenfalls denkbar, den dritten Vergrößerungskanal für den Anschluss einer Dokumentationseinrichtung, beispielsweise einer Kamera, zu nutzen.

Erfindungsgemäß weist das Objektiv, das von Hauptbeobachter und Assistent gemeinsam genutzt wird, eine im wesentlichen senkrecht verlaufende optische Achse auf, wobei die optische Achse des Zoom-Systems hierzu im wesentlichen senkrecht, d.h. im wesentlichen horizontal, verläuft. Durch diese Maßnahme ist die Bauhöhe des Mikroskops gegenüber herkömmlichen Stereomikroskopen mit Hauptbeobachtungs- und Assistenten-Strahlengang verkleinerbar.

Vorteilhafte Ausgestaltungen des erfindungsgemäßen Stereomikroskops sind Gegenstand der Unteransprüche.

Zweckmäßigerweise weist das Zoom-System vier Beobachtungs- bzw. Vergrößerungskanäle auf. Bei dieser Ausführungsform ist sowohl durch den Hauptbeobachter als auch den Assistenten eine stereoskopische Beobachtung des Objektes möglich. Das Vorsehen von vier Vergrößerungskanälen im Rahmen des Zoom-Systems stellt die bevorzugte Ausführungsform des erfindungsgemäßen Stereomikroskops dar, da hierbei sowohl für den Hauptoperateur als auch den Assistenten ein geringer vertikaler Abstand zwischen jeweiliger Beobachtungsachse und Objekt realisiert ist, wobei, wie erwähnt, eine besonders günstige Licht-Ausbeute gewährleistet ist. Es ist ebenfalls denkbar, in dem Zoom-System mehr als vier - beispielsweise sechs oder acht und insbesondere eine ungerade Anzahl Vergrößerungskanäle vorzusehen.

Zweckmäßigerweise verlaufen zwei Vergrößerungskanäle des Zoom-Systems, insbesondere die Hauptbeobachtungs-Vergrößerungskanäle, horizontal auf gleicher Höhe, wobei zwei weitere Vergrößerungskanäle parallel hierzu, d.h. ebenfalls horizontal, mit einer vertikalen Beabstandung zueinander verlaufen. Hierbei ist es insbesondere möglich, dass die vertikal beabstandeten Vergrößerungskanäle oberhalb bzw. unterhalb des Mittelpunkts der Verbindungslinie zwischen den auf gleicher Höhe, d.h. horizontal beabstandeten, Vergrößerungskanälen verlaufen. Hierdurch ist eine besonders dichte Packung der vier Vergrößerungskanäle gegeben, wodurch eine besonders geringe Bauhöhe des erfindungsgemäßen Stereomikroskops realisierbar ist.

Gemäß einer besonders bevorzugten Ausführungsform des erfindungsgemäßen Stereomikroskops weist dieses ein Umlenkelement zum Umlenken lediglich eines Teiles bzw. einer Teilmenge der es beaufschlagenden Strahlungsbüschel auf. Hierdurch ist es beispielsweise möglich, zwei dem Okular bzw. Tubus des Assistenten zuzuführende Strahlungsbüschel abzulenken, und die zwei dem Okular des Hauptoperateurs zuzuführenden Strahlungsbüschel ohne Umlenken passieren zu lassen. Insgesamt ist hierdurch in einfacher und lichtökonomischer Weise die Schaffung zweier unterschiedlicher bzw. unterschiedlich orientierter Beobachtungsachsen realisierbar.

Zweckmäßigerweise weist das erfindungsgemäße Stereomikroskop dem Zoom-System nachgeordnete Umlenkelemente auf, mittels derer die durch das Zoom-System in horizontaler Richtung verlaufenden Strahlenbüschel im wesentlichen um 180° in eine der Durchlaufrichtung durch das Zoom-System entgegengesetzte horizontale Richtung umlenkbar sind. Mit dieser Maßnahme ist zunächst die horizontale Baugröße des erfindungsgemäßen Stereomikroskops in geeigneter Weise dimensionierbar, ohne dass hierbei eine unerwünscht große vertikale Bauhöhe in Kauf genommen werden muss.

Gemäß einer besonders bevorzugten Ausführungsform des erfindungsgemäßen Stereomikroskops weist dieses wenigstens ein optisches Zusatzbauteil, insbesondere ein SDI-Element(Stereoscopic-Diagonal-Inverter), einen Laser-Shutter, einen optischen Teiler und/oder ein Filter, mit einer horizontal oder vertikal sich erstreckenden optischen Achse auf. Derartige Bauteile lassen sich in einfacher Weise in die jeweiligen horizontalen Strahlengänge des erfindungsgemäßen Stereomikroskops einbringen, ohne hierbei die vertikale Bauhöhe des Mikroskops zu vergrößern. Dieses gilt auch für erforderliche Bauelemente, mit denen eine Zwischenabbildung realisiert wird. Bei herkömmlichen Stereomikroskopen war es aufgrund ergonomischer und optischer Beschränkungen oftmals nicht, oder nur mit sehr großem Aufwand möglich, derartige optische Bauteile in den Strahlengang einzubringen. Insbesondere die Einbringung von SDI-Elementen, sogenannter "Pupillenvertauscher", erwies sich bei herkömmlichen, im wesentlichen vertikal verlaufenden Strahlengängen als die vertikale Bauhöhe stark vergrößernd und die optische Qualität verschlechternd. Ein SDI-Element dient zur Vertauschung des rechten und linken Stereokanals, derart, dass der linke Kanal zum rechten Kanal, und der rechte Kanal zum linken wird.

Es sei angemerkt, dass im Rahmen der Erfindung insbesondere Spiegel, Prismen, totalreflektierende Prismen sowie verspiegelte Prismen als Umlenkelemente einsetzbar sind. Ferner sei darauf hingewiesen, dass die optischen Zusatzkomponenten zweckmäßigerweise im Bereich jeweiliger Gerätepupillen eingesetzt werden sollten, um auf diese Weise gegebenenfalls auftretende Vignettierungen möglichst zu vermeiden.

Es sei schließlich darauf hingewiesen, dass durch Ausbildung eines horizontalen Zoom-Systems in der erfindungsgemäßen Weise wesentlich höhere Zoom-Werte als bei herkömmlichen ophthalmologischen Stereoassistentenmikroskopen praktisch realisierbar sind. Bei herkömmlichen Mikroskopen, bei denen das Zoom-System im wesentlichen vertikal angeordnet ist, führen größere Zoom-Werte zu inakzeptablen Bauhöhen.

Die Erfindung wird nun anhand eines bevorzugten Ausführungsbeispiels unter Bezugnahme auf die beigefügte Zeichnung weiter erläutert. In dieser zeigt
Figur 1 eine schematische Seitenansicht des Gesamtaufbaus einer bevorzugten Ausführungsform des erfindungsgemäßen Stereomikroskops,
Figur 2 eine Querschnittsansicht einer bevorzugten Ausführungsform eines erfindungsgemäß verwendbaren Zoom-Systems bzw. Pankraten,
Figur 3 eine Draufsicht einer bevorzugten Ausführungsform eines erfindungsgemäß einsetzbaren Umlenkelements zum teilweisen Umlenken von Strahlenbüscheln, und
Figur 4 eine vergrößerte Darstellung im Rahmen des erfindungsgemäßen Stereomikroskops einsetzbarer Umlenkelemente zum Trennen von Haupt- und Assistenten-Strahlengang.

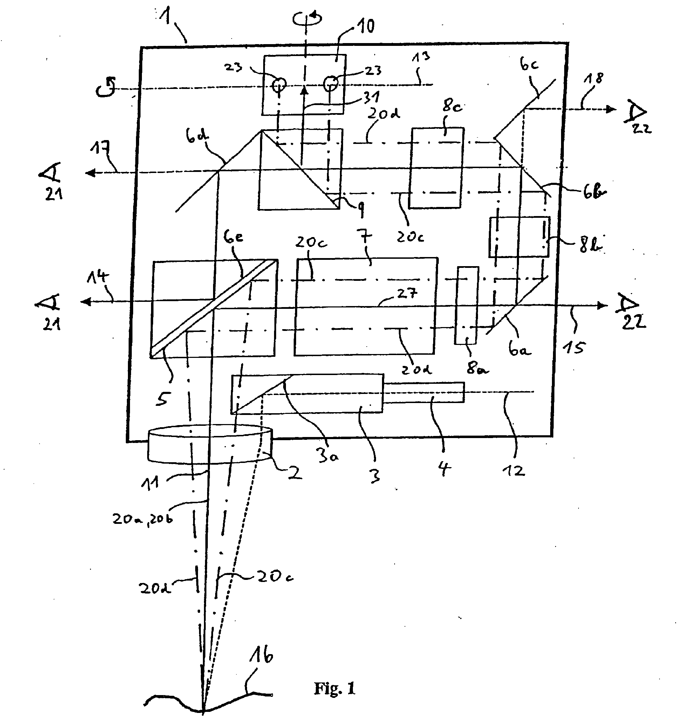

In Figur 1 ist ein (schematisch dargestellter) Mikroskopkörper einer bevorzugten Ausführungsform des erfindungsgemäßen Stereomikroskops mit 1 bezeichnet. Zur Definition der zur Beschreibung verwendeten Richtungsangaben sei davon ausgegangen, dass die in der Figur 1 linke Kante die Vorderseite und die rechte Kante die Rückseite des Mikroskops ist. Die zum Betrachter hin gerichtete Seite sei als rechte, die vom Betrachter abgewandte Seite als linke Seite des Mikroskops bezeichnet. Mittels des dargestellten Stereomikroskops soll ein Objekt 16 beobachtet werden. Bei dem dargestellten Stereomikroskop handelt es sich insbesondere um ein ophthalmologisches Mikroskop.

Das Stereomikroskop weist als wesentliche optische Komponenten ein Hauptobjektiv 2, ein Zoom-System 7 und ein (nicht dargestelltes) Okularsystem auf.

Zwischen dem Hauptobjektiv 2 und dem Zoom-System 7 ist ein erstes Umlenkelement 5 vorgesehen. Hinter dem Zoom-System 7 sind weitere Umlenkelemente 6a, 6b, 6c, 6d, 6e, 9, 10 sowie optische Zusatzkomponenten 8, 8a vorgesehen, deren Funktionen weiter unten erläutert werden.

Mit 3 ist eine Beleuchtungseinrichtung bezeichnet, welche mittels eines Faserkabels 4 bereitgestelltes Licht über ein Umlenkelement 3a auf das zu beobachtende Objekt 16 richtet. Die Hauptachse der Beleuchtungseinrichtung 3 ist mit 12 bezeichnet.

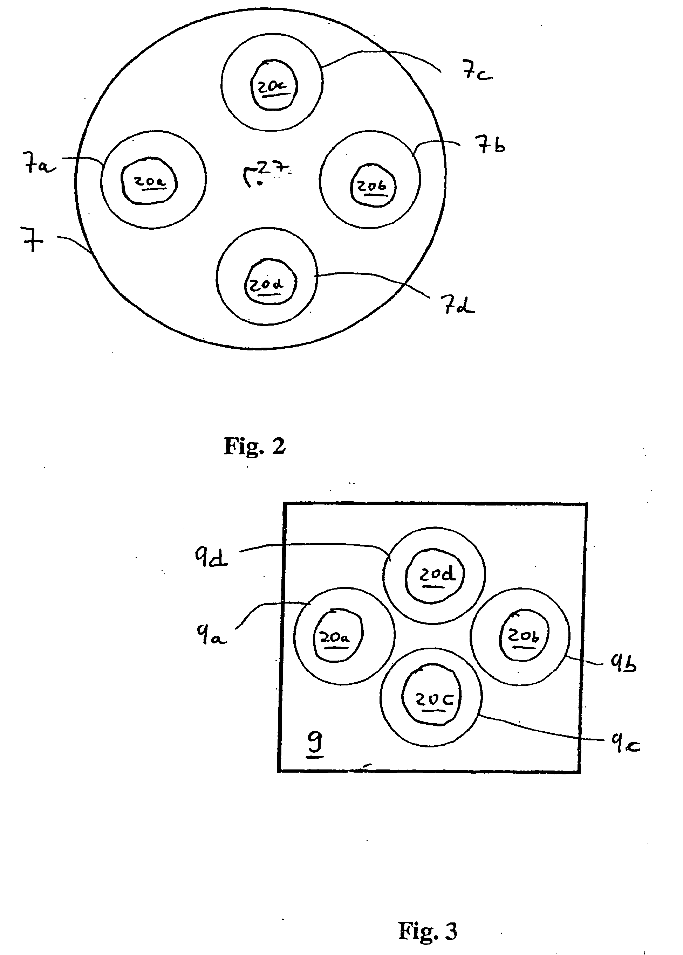

Wie aus Figur 2 ersichtlich, weist das Zoom-System 7 zwei Haupt-Beobachtungskanäle 7a, 7b sowie zwei Assistenten-Beobachtungskanäle 7c, 7d auf.

Das Hauptobjektiv 2 wird im wesentlichen in vertikaler Richtung von zwei Haupt-Beobachtungsstrahlenbüscheln 20a, 20b sowie von zwei Assistenten-Beobachtungsstrahlenbüscheln 20c, 20d durchsetzt, welche nach entsprechender (rechtwinkeliger) Umlenkung durch das Umlenkelement 5 in die im wesentlichen horizontal verlaufenden Haupt- bzw. Assistenten-Beobachtungskanäle 7a, 7b, 7c, 7d des Zoom-Systems eintreten. In Figur 2 sind entsprechend die Büschelquerschnitte der Strahlungsbüschel 20a-20d erkennbar.

Die zwei Haupt-Beobachtungsstrahlenbüschel 20a, 20b liegen in der Beobachtungsrichtung der Figur 1 hintereinander, so dass lediglich eines dieser Büschel darstellbar ist. Wie aus den Figuren 1 und 2 ferner deutlich wird, liegen die vier Haupt- bzw. Assistenten-Beobachtungsstrahlenbüschel 20a bis 20d symmetrisch verteilt um die optische Achse 11 des Hauptobjektivs 2. Vorteilhafterweise kann die gemeinsame Achse der Beobachtungsbüschel 20a bis 20d auch dezentrisch das Hauptobjektiv durchsetzen, also parallel zur Achse 11 liegen. Entsprechendes gilt für die in Figur 2 eingezeichnete Mittelachse 27 des Zoom-Systems 7, um welche herum die Beobachtungskanäle 7a bis 7d bzw. die diese durchstrahlenden Strahlenbüschel 20a bis 20d symmetrisch angeordnet sind.

Man erkennt, dass die Haupt-Beobachtungskanäle 7a, 7b auf einer horizontalen Ebene, d.h. auf der Höhe der Mittelachse 27 verlaufen, während die Assistenten-Beobachtungskanäle 7c, 7d mit senkrechter Beabstandung zueinander oberhalb bzw. unterhalb der Mittelachse 27 verlaufen. Durch die dargestellte Anordnung ist eine sehr dichte Packung der Beobachtungskanäle 7a bis 7d realisiert, wodurch insgesamt eine kompakte Bauweise des erfindungsgemäßen Stereomikroskops erreichbar ist.

Nach Ihrem Austritt aus dem Zoom-System 7 erfolgt eine weitere Umlenkung der Beobachtungsstrahlenbüschel 20a bis 20d an dem weiteren Umlenkelement 6a.

Mittels dieses Umlenkelements 6a werden die Beobachtungsstrahlenbüschel 20a bis 20d im wesentlichen wieder in die Vertikale gelenkt. Anschließend treffen sie auf ein weiteres Umlenkelement 6b, mittels dessen eine erneute Umlenkung in die Horizontale erfolgt, wodurch es, gegebenenfalls nach einem Durchlaufen der optional vorgesehenen, insgesamt mit 8 bezeichneten weiteren optischen Komponenten, zu einer Beaufschlagung des Umlenkelements 9 kommt, dessen Funktion im folgenden erläutert wird. Es sei an dieser Stelle angemerkt, dass Umlenkelement 6a und/oder Umlenkelement 6b als optischer Strahlenteiler ausgebildet sein können, wodurch mit 15 bzw. 18 bezeichnete Beobachtungsachsen definierbar sind. Zur Definition der Beobachtungsachse 18 wird hierbei ein weiteres Umlenkelement 6c eingesetzt, wie in Figur 1 dargestellt ist. Die Beobachtungsachsen 15, 18 werden zweckmäßigerweise im Rahmen einer 180°-Assistentenbeobachtung genutzt, wobei der vertikale Abstand zwischen Objekt 16 und Beobachtungsachse 18 größer als derjenige zwischen Objekt 16 und Beobachtungsachse 15 ist.

Es sei jedoch darauf hingewiesen, dass diese Beobachtungsachsen 15, 18 lediglich optional verwirklicht sind. Die wesentlichen Beobachtungsachsen für den Haupt-Beobachter bzw. den Assistenten-Beobachter sind gemäß der dargestellten Ausführungsform mit 14 bzw. 23 bezeichnet, wie nun weiter erläutert wird.

Die für die Beobachtung notwendigen Binokulartuben und Okulare für Haupt-Beobachter 21 bzw. Assistentenbeobachter 22 sind der Übersicht wegen an den Achsen 14, 15, 17, 18 und 23 in der Figur 1 nicht eingezeichnet.

Die mittels des Umlenkelements 6b in die Horizontale umgelenkten Strahlenbüschel 20a bis 20d treffen, wie erwähnt, auf das Umlenkelement 9. Umlenkelement 9 ist derart ausgebildet, dass es lediglich die Strahlenbüschel 20c, 20d umlenkt, während die Strahlenbüschel 20a, 20b das Umlenkelement 9 ohne Umlenkung passieren und auf das weitere Umlenkelement 6d treffen.

In Figur 3 ist das Umlenkelement 9 in Auftreffrichtung der Strahlenbüschel 20a bis 20d dargestellt. Die Querschnitte der Strahlenbüschel 20a - 20d treffen auf entsprechende Bereiche 9a - 9d des Umlenkelements. Zur Umlenkung der Beobachtungsstrahlenbüschel 20c, 20d sind die Bereiche 9c, 9d des Umlenkelements 9 verspiegelt ausgebildet, während die Bereiche 9a, 9b durchlässig bzw. transparent ausgebildet sind, so dass ein ungehinderter Durchtritt der Beobachtungsstrahlenbüschel 20a, 20b möglich ist.

Durch den Einsatz eines derartigen Umlenkelements 9 ist eine räumliche Trennung der Haupt-Beobachtungsstrahlenbüschel 20a, 20b von den Assistenten-Beobachtungsstrahlenbüscheln 20c, 20d in einfacher Weise ohne einen Verlust von Lichtintensität, welcher beispielsweise bei einem Einsatz halbdurchlässiger Strahlenteiler nicht zu vermeiden ist, in einfacher Weise baulich realisiert.

Wie bereits erwähnt, treffen die Haupt-Beobachtungsstrahlenbüschel 20a, 20b nach ihrem Durchtritt durch die Bereiche 9a, 9b des Umlenkelements 9 auf das weitere Umlenkelement 6d, mittels dessen eine Umlenkung der horizontal verlaufenden Beobachtungsstrahlenbüschel 20a, 20d vertikal nach unten durchgeführt wird, wobei die Beobachtungsstrahlenbüschel 20a, 20b anschließend auf ein weiteres Umlenkelement 6e treffen, welches eine erneute Umlenkung in die Horizontale bewirkt, wodurch die bereits erwähnte Beobachtungsachse 14 definiert ist. Die Beobachtungsachse 14 zeichnet sich durch einen besonders geringen vertikalen Abstand zu dem zu beobachtenden Objekt 16 aus.

Ist hingegen, beispielsweise aus ergonomischen Gründen, ein größerer vertikaler Abstand zu dem Objekt 16 gewünscht, kann auf das Umlenkelement 6d verzichtet werden, wodurch sich die mit 17 bezeichnete Beobachtungsachse ergibt. Alternativ ist es denkbar, das Umlenkelement 6d halbdurchlässig auszubilden, wodurch beide genannten Beobachtungspositionen 14 und 17 gleichzeitig realisierbar sind.

Durch entsprechende Ausgestaltung des Umlenkelements 6d kann also beispielsweise der Hauptbeobachter durch einen (nicht eingezeichneten) Binokulartubus entweder auf der Höhe der Beobachtungsachse 14 oder 17 in das Mikroskop einblicken. Dies wird in der Praxis von der ergonomisch notwendigen bzw. gewünschten Bauhöhe des Mikroskops abhängen. Gleiches gilt für die weiter oben erwähnten Beobachtungsachsen 15, 18, welche Varianten für eine assistentische feste 180°-Mitbeobachtung darstellen.

Durch besondere Ausgestaltung der Umlenkelemente 6c, 6d und 6e können die Achsen 14, 17 und 18 auch von dem in Figur 1 gezeichneten rechten Winkel zur Achse 11 abweichen, bzw. sogar variabel sein, wenn die besagten Umlenkelemente kippbar sind.

Durch die Anzahl der Umlenkungen ist darauf zu achten, dass die Ausgestaltung der Umlenkelemente 6c, 6d, 6e und 10 so erfolgt, dass stets ein aufrechtes und seitenrichtiges Bild an den Achsen 14, 17, 18 und 23 vorliegt. Dies erreicht man beispielsweise mit Dachkanten und/oder Pentaprismen.

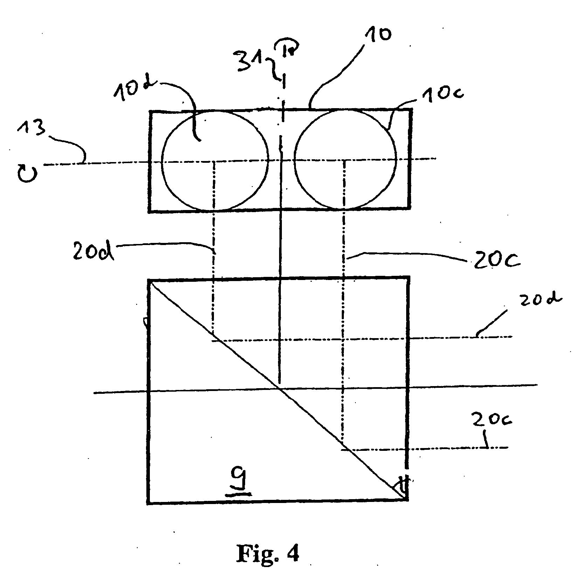

Nach der Umlenkung in den Bereichen 7c, 7d treffen die Beobachtungsstrahlenbüschel 20c, 20d auf ein weiteres, mit 10 bezeichnetes Umlenkelement. Dieses Umlenkelement 10 kann insgesamt aus einer Anzahl von Umlenkkomponenten bestehen, welche durch ein sogenanntes 2α-Getriebe verbunden sind, so dass eine Umlenkung der Beobachtungsstrahlenbüschel 20c, 20d aus der in Figur 1 dargestellten Zeichenebene heraus um eine Drehachse 13 realisierbar ist. Unter einen 2α-Getriebe wird ein Getriebe verstanden, bei dem eine eingangsseitige Drehung um einen Winkel α eine Drehung auf einer Ausgangsseite bzw. abführenden Seite um einen Winkel 2α bewirkt. Der Sachverhalt wird nun unter Bezugnahme auf Figur 4 weiter erläutert.

In Figur 4 erkennt man die an dem Umlenkelement 9 in die Vertikale abgelenkten Beobachtungsstrahlenbüschel 20c, 20d. In der Darstellung der Figur 4 weist das Umlenkelement 10 zwei Umlenkbereiche 10c, 10d auf, mittels derer die Beobachtungsstrahlenbüschel 20c, 20d beispielsweise senkrecht aus der Zeichenebene heraus ablenkbar sind. Ein Verschwenken des Umlenkelements 10 um die Achse 13 ermöglicht das Umlegen des Assistenteneinblicks von der rechten auf die linke Seite des Mikroskops um die Achse 13, d.h. über die obere Fläche des Mikroskopkörpers 1 hinweg. Bislang wurden nur Drehungen des Assistenteneinblicks um die senkrecht verlaufende Achse 11 bzw. 31 um die vordere Fläche eines Mikroskops herum realisiert, wodurch es beispielsweise aufgrund von weiteren optischen Komponenten, die im Bereich der vorderen Fläche des Mikroskops vorgesehen waren, zu Behinderungen kommen konnte, wodurch aufwendige Umbauarbeiten bei einer Änderung der Assistenten-Einblickposition notwendig waren.

Anstelle des dargestellten Umlenkelements 10 kann auch eine mechanische Schnittstelle vorhanden sein, die den sogenannten 180°-Binokulartubus aufnimmt, der im Prinzip die gleiche Umlenkung ermöglicht, allerdings gegebenenfalls eine zu korrigierende Baulänge aufweist. Es sei angemerkt, dass es sich bei einem 180°-Binokulartubus um eine stereoskopische Einblickvorrichtung mit Okularen handelt, die stets oberhalb des Zoom-Systems zum Einsatz kommt. Der 180°-Binokulartubus dient insbesondere dazu, parallele Strahlengänge in konvergente Strahlengänge umzuwandeln. Es sollte ferner die Möglichkeit bestehen, dass in den assistentischen Einblick auch ein separates Zoom-System sowie gegebenenfalls weitere Umlenkelemente, Umkehrsysteme zur Bildaufrichtung, Strahlvertauscher wie etwa SDI-Systeme, Filtereinschübe und/ oder Abbildungsoptiken zur ergonomischen Strahlumlenkung eingesetzt werden können. Bei der dargestellten Ausführungsform des erfindungsgemäßen Stereomikroskops ist es ebenfalls denkbar, eine Verdrehbarkeit des Umlenkelements 10 um die Achse 31, wie sie aus dem Stand der Technik bekannt ist, zusätzlich oder alternativ zu der oben beschriebenen Drehung um die Achse 13 vorzusehen.

Es sei darauf hingewiesen, dass die für sämtliche dargestellten Umlenkelemente jeweils beschriebene Umlenkung von im wesentlichen 90° lediglich beispielhaft gewählt ist. Je nach Raumverhältnissen sind auch kleinere oder größere Umlenkwinkel notwendig oder erwünscht, wobei dies in allen Raumrichtungen realisierbar ist, so dass es durchaus zu windschiefen Ablenkungen kommen kann.

Die bereits erwähnte Beleuchtungseinrichtung 3, 4 ist, wie dargestellt, vorteilhaft zwischen dem Hauptobjektiv 2 und dem Umlenkelement 5 angeordnet. Alternativ kann diese Beleuchtung auch zwischen dem Umlenkelement 5 und dem Zoom-System 7 oder im Bereich zwischen dem Umlenkelement 5 und den Umlenkelementen 6d, 9 angeordnet sein. Das Umlenkelement ist in diesem Fall dann teildurchlässig. Vor den nicht dargestellten Binokulartuben zum stereoskopischen Einblick für Hauptoperateur 21 und Assistent 22 an den Beobachtungsachsen 14, 15, 17, 18, 23 soll wahlweise auch die Möglichkeit bestehen, sogenannte "Auszugsverlängerungen", die den Abstand dieser Tuben zu dem Mikroskopgehäuse 1 variabel halten, vorsehen. Ebenfalls an diesen Achsen sind die Tuben um diese Achse über eine sogenannte "Drehschwalbe" vorteilhaft drehbar befestigbar. Die Drehschwalben stellen somit die mechanische Verbindung zwischen dem Mikroskop und dem jeweiligen, an den Achsen 14, 15, 17, 18 vorsehbaren Binokulartuben dar. Das heißt, die Drehschwalben bzw. die drehbaren SchwalbenschwanzFührungen sind um die genannten Achsen 14, 15, 17, 18 drehbar.

Es ist ferner möglich, in die beschriebenen Strahlengänge weitere optische Komponenten einzubringen, welche in Figur 1 insgesamt beispielhaft mit 8 a, b, c bezeichnet sind. Die Zusatzkomponenten 8 sind wahlweise an den bezeichneten Stellen einzusetzen. Derartige Komponenten können beispielsweise eine Zwischenabbildung oder eine Pupillenverlagerung bewirken. Es kann sich bei diesen Elementen ebenfalls um Blenden handeln, welche den Lichtstrom wahlweise in verschiedenen Kombinationsmöglichkeiten in den unterschiedlichen Beobachtungskanälen unterbrechen oder freigeben. Es können hierbei mechanische Blenden oder Displays mit elektrochromen, ansteuerbaren Schichten verwendet werden. Durch diese Aufreihung von Komponenten entlang einer horizontalen Achse kann eine unergonomische, allzu große Bauhöhe, wie sie bei herkömmlichen ophthalmologischen Stereo-Assistentenmikroskopen festzustellen ist, wirksam vermieden werden.

Das Zoom-System 7 zeichnet sich zweckmäßigerweise dadurch aus, dass es Vergrößerungen im Bereich 5 - 10 ermöglicht, wobei jeder Beobachtungskanal zweckmäßigerweise aus mindestens drei optischen Gruppen, von denen mindestens eine Gruppe feststeht, besteht. Ferner sollten die Beobachtungskanäle parallel zueinander ausgerichtet sein.

Das Hauptobjektiv 2 ist in der Darstellung der Figur 1 als symmetrisch zu seiner Achse 11 dargestellt. Es ist ebenfalls möglich, das Hauptobjektiv dezentriert hierzu anzuordnen. Die optische Korrektur dieses Objektivs ist vorteilhafterweise achromatisch oder apochromatisch unter spezieller Berücksichtigung des sekundären Spektrums.

Die in den Figuren 2 und 3 dargestellten Büschelquerschnitte (Pupillen) können unterschiedliche Durchmesser aufweisen und zueinander eine beliebige Lage aufweisen. Die Abstände zwischen den Mittelpunkten der Büschel 20a, 20b und 20c, 20d werden typischerweise als Stereobasis bezeichnet, und weisen einen Wert zwischen 20mm und 30mm auf. Im Falle des Auftretens von Hindernissen, beispielsweise des Umlenkelements 9, welches einen Teil der Beobachtungsstrahlenbüschel ungehindert passieren lassen soll, können durch weitere Umlenkelemente in den Strahlachsen größere Beabstandungen zwischen den einzelnen Beobachtungsstrahlenbüscheln notwendig werden, die nach "Umgehen" des Hindernisses wieder zusammengeführt und reduziert werden können.

Es ist ebenfalls möglich, Dokumentationseinrichtungen, beispielsweise Kameras, prinzipiell auch an den Beobachtungsachsen, an denen typischerweise Binokulartuben vorgesehen sind, anzusetzen, wobei es ebenfalls denkbar ist, weitere optische Teiler einzusetzen.

Unter Bezugnahme insbesondere auf Figur 1 wird deutlich, dass die Strahlenbüschel 20a, 20b (auf der vertikalen Strecke) zwischen dem Objekt 16 und dem ersten Umlenkelement 5 die gleiche Laufstrecke zurückzulegen haben, da sie das Umlenkelement 5 auf gleicher Höhe beaufschlagen. Hingegen ist die entsprechend durch die Strahlenbüschel 20c, 20d zurückzulegende Strecke zwischen Objekt und erstem Umlenkelement aufgrund der verschieden hohen vertikalen Beaufschlagungspunkte auf dem Umlenkelement 5 unterschiedlich, so dass im Verlauf des weiteren Strahlengangs durch das Mikroskop ein entsprechender Ausgleich durchgeführt werden muß. Erfindungsgemäß wird ein derartiger Ausgleich durch eine entsprechende Anzahl bzw. Ausrichtung von weiteren Umlenkelementen, im vorliegenden Beispiel 6a, 6b und 6c realisiert, so dass bei Erreichen der Beobachtungsachse 23 ein entsprechender Streckenausgleich stattgefunden hat.

### Bezugszeichenliste

1 Mikroskopkörper
2 Hauptobjektiv
3 Beleuchtungseinrichtung
3a Umlenkelement
4 Faserkabel
5 Umlenkelement
6a, 6b, 6c, 6d, 6e Umlenkelemente
7 Zoom-System
7a, 7b Haupt-Beobachtungskanäle
7c, 7d Assistenten-Beobachtungskanäle
8a, b, c Zusatzkomponenten, wahlweise z.B. Filter, Laser-Shutter, SDI, optische Teiler, Dateneinspiegelungen
9 Umlenkelement für Assistentenstrahlengang
9a, 9b, 9c, 9d Durchlass- bzw. Umlenkbereiche des Umlenkelements 9
10 Umlenkelement für Verschwenkung des Assistenten-strahlengangs
10c, 10d Umlenkbereiche des Umlenkelements 10
11 Symmetrieachse des Hauptobjektivs
12 Achse der Beleuchtungseinrichtung
13 Drehachse Umlenkelement 10
14 Beobachtungsachse
15 Beobachtungsachse
16 Objekt
17 Beobachtungsachse
18 Beobachtungsachse
20a, 20b Haupt-Beobachtungsstrahlenbüschel
20c, 20d Assistenten-Beobachtungsstrahlenbüschel
21 Haupt-Beobachter
22 Assistenten-Beobachter
23 Assistenten-Beobachtungsachse
27 Mittelachse Zoomsystem
31 Achse

## Patentansprüche

1. Stereomikroskop mit einem Objektiv (2) mit einer im wesentlichen senkrecht verlaufenden optischen Achse (11) und einem dem Objektiv nachgeordneten Zoom-System (7), mit einer hierzu im wesentlichen senkrecht verlaufenden optischen Achse, wobei zwischen dem Objektiv (2) und dem Zoom-System (7) ein Umlenkelement (5) zum Umlenken aus dem Objektiv (2) austretender Beobachtungsstrahlenbüschel in entsprechende Vergrößerungs- bzw. Beobachtungskanäle des Zoom-Systems (7) vorgesehen ist,
**dadurch gekennzeichnet,**
**dass** das Zoom-System (7) wenigstens drei im wesentlichen horizontal verlaufende Vergrößerungs- bzw. Beobachtungskanäle (7a, 7b, 7c, 7d) aufweist.

2. Stereomikroskop nach Anspruch 1, **dadurch gekennzeichnet, dass** das Zoom-System (7) vier Vergrößerungs- bzw. Beobachtungskanäle (7a, 7b, 7c, 7d) aufweist.

3. Stereomikroskop nach Anspruch 1 oder 2, **dadurch gekennzeichnet, dass** zwei Vergrößerungs- bzw. Beobachtungskanäle des Zoom-Systems (7) horizontal auf gleicher Höhe, und zwei Vergrößerungskanäle (7c, 7d) horizontal mit einer vertikalen Beabstandung zueinander verlaufen.

4. Stereomikroskop nach einem der vorstehenden Ansprüche, **gekennzeichnet durch** ein Umlenkelement (9) zum Umlenken lediglich einer Teilmenge (20c, 20d) der es beaufschlagenden Beobachtungsstrahlenbüschel (20a, 20b, 20c, 20d).

5. Stereomikroskop nach einem der vorstehenden Ansprüche, **gekennzeichnet durch** ein um eine horizontale Achse (13) verschwenkbares Umlenkelement(10).

6. Stereomikroskop nach einem der vorstehenden Ansprüche, **gekennzeichnet durch** ein um eine vertikale Achse (31) verschwenkbares Umlenkelement (10).

7. Stereomikroskop nach einem der vorstehenden Ansprüche, **gekennzeichnet durch** dem Zoom-System (7) nachgeordnete Umlenkelemente (6a, 6b), mittels derer die das Zoom-System (7) in horizontaler Richtung durchlaufenden Strahlenbüschel (20a, 20b, 20c, 20d) im wesentlichen um 180° in eine der Durchlaufrichtung **durch** das Zoom-System (7) entgegengesetzte horizontale Richtung umlenkbar sind.

8. Stereomikroskop nach einem der vorstehenden Ansprüche, **gekennzeichnet durch** wenigstens ein optisches Zusatzbauteil 8a, b, c, insbesondere SDI-Element, Laser-Shutter, optischer Teiler, Dateneinspiegelung und/oder Filter, mit einer horizontal oder vertikal sich erstrekkenden optischen Achse.

## Claims

1. Stereomicroscope having an objective (2), the objective (2) comprising an optical axis (11) extending substantially vertically, and a zoom system (7) downstream of the objective, the zoom system (7) comprising an optical axis extending substantially perpendicularly thereto, a deflector element (5) for deflecting observation beams emerging from the objective (2) into corresponding magnification or observation channels of the zoom system (7) being provided between the objective (2) and the zoom system (7),
**characterised in that**
the zoom system (7) comprises at least three substantially horizontally extending magnification or observation channels (7a, 7b, 7c, 7d).

2. Stereomicroscope according to claim 1, **characterised in that** the zoom system (7) comprises four magnification or observation channels (7a, 7b, 7c, 7d).

3. Stereomicroscope according to claim 1 or 2, **characterised in that** two magnification or observation channels of the zoom system (7) extend horizontally at the same height and two magnification channels (7c, 7d) extend horizontally at a vertical spacing from one another.

4. Stereomicroscope according to any one of the preceding claims, **characterised by** a deflector element (9) for deflecting only part (20c, 20d) of the observation beams (20a, 20b, 20c, 20d) acting upon it.

5. Stereomicroscope according to any one of the preceding claims, **characterised by** a deflector element (10) which is pivotable about a horizontal axis (13).

6. Stereomicroscope according to any one of the preceding claims, **characterised by** a deflector element (10) which is pivotable about a vertical axis (31).

7. Stereomicroscope according to any one of the preceding claims, **characterised by** deflector elements (6a, 6b) downstream of the zoom system (7), by means of which the beams (20a, 20b, 20c, 20d) passing through the zoom system (7) in the horizontal direction can be deflected substantially through 180° into a horizontal direction which is opposite the direction of passing through the zoom system (7).

8. Stereomicroscope according to any one of the preceding claims, **characterised by** at least one optical add on component 8a, b, c, particularly an SDI element, laser shutter, optical splitter, data projector and/or filter, with a horizontally or vertically extending optical axis.

## Revendications

1. Stéréomicroscope comportant un objectif (2), un axe optique (11) qui s'étend sensiblement verticalement, et un système de zoom (7) agencé en aval de l'objectif et présentant un axe optique qui s'étend sensiblement perpendiculairement à celui-ci, un élément de déflexion (5) étant prévu entre l'objectif (2) et le système de zoom (7) pour défléchir des faisceaux de rayons d'observation sortant de l'objectif (2) vers des canaux d'agrandissement ou d'observation correspondants du système de zoom (7),
**caractérisé en ce que**
le système de zoom (7) comprend au moins trois canaux d'agrandissement ou d'observation (7a, 7b, 7c, 7d) qui s'étendent sensiblement horizontalement.

2. Stéréomicroscope selon la revendication 1, **caractérisé en ce que** le système de zoom (7) comprend quatre canaux d'agrandissement ou d'observation (7a, 7b, 7c, 7d).

3. Stéréomicroscope selon l'une des revendications 1 et 2, **caractérisé en ce que** deux canaux d'agrandissement ou d'observation du système de zoom (7) se trouvent horizontalement à la même hauteur, et **en ce que** deux canaux d'agrandissement (7c, 7d) s'étendent horizontalement à distance verticale l'un de l'autre.

4. Stéréomicroscope selon l'une des revendications précédentes, **caractérisé par** un élément de déflexion (9) pour défléchir seulement une quantité partielle (20c, 20d) des faisceaux de rayons d'observation (20a, 20b, 20c, 20d) qui tombent sur lui.

5. Stéréomicroscope selon l'une des revendications précédentes, **caractérisé par** un élément de déflexion (10) pivotant autour d'un axe horizontal (13).

6. Stéréomicroscope selon l'une des revendications précédentes, **caractérisé par** un élément de déflexion (10) pivotant autour d'un axe vertical (31).

7. Stéréomicroscope selon l'une des revendications précédentes, **caractérisé par** des éléments de déflexion (6a, 6b) agencés en aval du système de zoom (7), au moyen desquels les faisceaux de rayons (20a, 20b, 20c, 20d) traversant le système de zoom (7) en direction horizontale sont susceptibles d'être défléchis sensiblement de 180° vers une direction horizontale opposée à la direction de passage à travers le système de zoom (7).

8. Stéréomicroscope selon l'une des revendications précédentes, **caractérisé par** au moins un composant optique supplémentaire (8a, b, d), en particulier élément SDI, obturateur laser, subdiviseur optique, dispositif d'injection de données par réflexion et/ou filtre, pourvu d'un axe optique qui s'étend horizontalement ou verticalement.
